(19) Europäisches Patentamt
European Patent Office
Office européen des brevets

(11) **EP 2 544 930 B1**

(12) **EUROPEAN PATENT SPECIFICATION**

(45) Date of publication and mention
of the grant of the patent:
**16.05.2018 Bulletin 2018/20**

(21) Application number: **11753687.0**

(22) Date of filing: **03.03.2011**

(51) Int Cl.:
*B60T 7/12* (2006.01)    *B60W 30/18* (2012.01)
*B60W 10/02* (2006.01)   *B60W 10/18* (2012.01)
*B60W 10/184* (2012.01)

(86) International application number:
**PCT/SE2011/050241**

(87) International publication number:
**WO 2011/112138 (15.09.2011 Gazette 2011/37)**

(54) **METHOD AND COMPUTER PROGRAMME PRODUCT FOR CONTROL OF A VEHICLE POWER TRAIN AND SERVICE BRAKE SYSTEM**

VERFAHREN UND COMPUTERPROGRAMM ZUR STEUERUNG EINES FAHRZEUGANTRIEBSZUGS UND EINES BREMSDIENSTSYSTEMS

PROCÉDÉ ET PRODUIT-PROGRAMME D'ORDINATEUR POUR LA COMMANDE D'UNE TRANSMISSION DE VÉHICULE ET D'UN SYSTÈME DE FREIN DE SERVICE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.03.2010 SE 1050213**

(43) Date of publication of application:
**16.01.2013 Bulletin 2013/03**

(73) Proprietor: **Scania CV AB**
**151 87 Södertälje (SE)**

(72) Inventors:
• **ÖUN, Mikael**
**S-145 65 Norsborg (SE)**
• **LIWELL, Mats**
**S-152 51 Södertälje (SE)**
• **ASPLUND, Peter**
**S-647 30 Mariefred (SE)**

(74) Representative: **Scania CV AB**
**Patents, GP 117kv**
**151 87 Södertälje (SE)**

(56) References cited:
EP-A1- 1 447 261        EP-A1- 1 447 261
EP-A2- 1 886 890        WO-A1-02/094602
WO-A1-2008/113689       WO-A2-2004/067312
DE-A1-102007 012 788    FR-A1- 2 813 248
FR-A1- 2 858 032        GB-A- 2 167 507
GB-A- 2 309 495         GB-A- 2 345 523
JP-A- 2002 283 979      JP-A- 2009 262 766
US-A- 5 431 607         US-A1- 2004 067 818
US-A1- 2007 096 557     US-A1- 2008 204 214
US-B2- 6 910 988

## Description

FIELD OF THE INVENTION

The present invention relates to a method for control of a power train of a motor vehicle according to the preamble of claim 1. The invention further relates to a computer programme comprising computer programme code for implementing a method according to the invention, to a computer programme product comprising a data storage medium which is readable by an electronic control unit and has said computer programme stored on it, and to an electronic control unit.

PRIOR ART

Heavy motor vehicles, e.g. trucks, tractor units and buses, are often provided with a so-called "hill hold" function to make it easier and safer for the driver to drive off when the vehicle has been halted temporarily on an upgrade. This function is also provided in certain passenger cars.

Said "hill hold" function usually comprises automatic brake operation whereby in certain given conditions the braking force of one or more brakes of a vehicle is automatically maintained temporarily when the vehicle's driver releases the brake pedal. A "hill hold" function is applied to prevent the vehicle from rolling when the brake pedal has been released, in order to make it easier for the driver to drive off after he/she has temporarily halted the vehicle on an upgrade with the engine still running.

In certain given conditions, provided that the functionality has been activated by the driver, the "hill hold" function is usually initiated automatically when it is detected that the driver has released the brake pedal and the vehicle is stationary. When a "hill hold" function has been initiated, the braking force of one or more brakes of the vehicle is controlled to prevent the vehicle from rolling. This is usually achieved by maintaining a suitable braking force on its ordinary wheel brakes. During a "hill hold" function, the vehicle is held in place and prevented from rolling rearwards when it has been halted on an upgrade, despite the driver having released the brake pedal. This makes it possible for the driver to take the steps required for driving off on an upgrade, which involve moving the foot from the brake pedal to the accelerator pedal and depressing the accelerator pedal, without running the risk that the vehicle might start rolling rearwards. An initiated "hill hold" function is ended automatically and the braking force is reduced to zero when it is detected that the driver is about to drive off.

As mentioned above, however, it is normally necessary that the "hill hold" function be activated manually by the driver via some form of control device. The reason for it being undesirable that the "hill hold" function be activated automatically is that in winter there would then be risk of wheel locking because the brake system might think that the vehicle was stationary, whereas it was actually rolling very slowly.

The fact that the "hill hold" function has to be activated manually leads to certain drivers forgetting, or quite simply not bothering, to activate it, despite justification for the function to be activated.

Moreover, in certain circumstances it is desirable from the driver's point of view to allow the vehicle to roll a distance in the opposite direction to that indicated by a chosen gear position, e.g. in certain cases when about to set the vehicle in motion on an upgrade.

An example of when the driver about to set the vehicle in motion on an upgrade may wish to roll a certain distance in the opposite direction to that indicated by a chosen gear position is if the running surface is slippery in places and he/she wishes to allow the vehicle to roll rearwards to a location where the grip on the running surface is better.

Another example of when the driver about to set the vehicle in motion on an upgrade may wish to roll a certain distance in the opposite direction to that indicated by a chosen gear position is if a vehicle in front begins to move towards the driver's vehicle.

Similar situations may occur if the driver intends to reverse the vehicle up a gradient, in which case he/she may conversely wish to roll a certain distance forwards, i.e. here again in the opposite direction to that indicated by a chosen gear position.

After the vehicle, from having been substantially stationary, has rolled a certain distance in the opposite direction to that indicated by a chosen gear position, the driver then depresses the accelerator pedal, thereby, according to prior art, causing a clutch function to engage in the power train via some form of slide-in process. Said slide-in process causes the vehicle's speed to decrease initially to stationary before subsequently increasing in the direction of movement indicated by the chosen gear position.

The part of said slide-in process during which the vehicle's speed is caused to decrease to stationary leads inter alia to increased wear and/or high thermal stress on the clutch function. This applies for example if the vehicle is equipped with some kind of automatically controlled clutch function. An automatically controlled clutch function comprises for example an automatically controlled dry-plate or wet-plate clutch. An automatically controlled clutch function comprises configurations with one, two or more automatically controlled clutches of some kind (two as used in a so-called direct shift gear, DSG, gearbox).

It is generally desirable to reduce the wear and the thermal stress on a clutch function, subject however to not entailing adverse effects on drivability.

Patent specification US6910988B2 refers to a method for reducing fuel consumption where there are repeated turning movements of a wheel-mounted loader. Such turning movements occur often during operation of such a loader as it is driven short distances to and fro during loading (which accounts for a large proportion of its operating time). When the loader is driven in a direction, e.g. forwards, the driver may move a mode selector to a position which indicates an opposite direction of movement. After the mode selector has assumed the position for the new direction of movement, an automated procedure is initiated whereby the vehicle's gearbox is disengaged from driving connection with the engine and a gear change to the gear position indicated is effected. In addition, the vehicle's service brakes are applied, reducing the loader's speed to almost stationary. Thereafter the service brakes are deactivated and the gearbox is gradually engaged to driving connection with the engine so that the vehicle moves in the new, opposite, direction.

The method according to US6910988 means that fuel consumption of a wheel-mounted loader is reduced by the braking being effected by means of the vehicle's service brakes and not by the otherwise usual procedure of using a torque converter which is present in the vehicle's power train. Moreover, the power of the loader's engine can be used for purposes other than braking, e.g. lifting of bucketloads.

WO2004067312 discloses a system and method for holding a vehicle stationary on a slope. If the vehicle is rolling against the will of the driver, the service brakes are applied.

## DESCRIPTION OF THE INVENTION

The object of the present invention is to propose a novel and advantageous way of reducing wear and/or thermal stress on a clutch function of a vehicle.

According to the invention, this object is achieved by a method which comprises the features defined in claim 1.

The invention is applicable when the vehicle is in a first state defined by at least:

- detection that its gearbox is in a state which indicates a direction of movement;
- detection that its clutch function is in an open state;
- detection of depression of the accelerator pedal.

When the vehicle is in said first state, there is detection of the direction in which it is rolling, or of the vehicle being stationary.

Said rolling direction detected is then compared with the direction of movement indicated by the gearbox state detected.

If the vehicle is found to be rolling in the opposite direction to that indicated by the gearbox state detected, the vehicle's service brakes are applied.

The method according to the invention leads to less wear and/or thermal stress on the clutch function as compared with prior art which involves initiation of a clutch function slide-in process.

The method according to the invention also makes it possible to achieve reduced wear and/or thermal stress on the clutch function without affecting the driver's perception of the vehicle's drivability.

Further advantageous features of the method according to the invention are indicated in the dependent claims and the description set out below.

The invention relates also to a computer programme having the features defined in claim 17, a computer programme product having the features defined in claim 18 and an electronic control unit having the features defined in claim 19.

## BRIEF DESCRIPTION OF THE DRAWINGS

A detailed description of embodiments of the invention cited as examples is set out below with reference to the attached drawings, in which:

| | |
|---|---|
| Figure 1 | is a schematic diagram of chosen parts of a power train and a brake system, together with selected control systems and sensors, in a motor vehicle according to an embodiment of the present invention. |
| Figure 2 | is a schematic diagram illustrating how vehicle speed, brake pressure and clutch torque vary during the application of a method according to an embodiment of the present invention. |
| Figure 3 | is a schematic diagram illustrating how vehicle speed is extrapolated to estimate the point in time when it is equal to zero. |
| Figures 4a/b | are a flowchart illustrating a method according to an embodiment of the invention. |

## EMBODIMENTS OF THE INVENTION

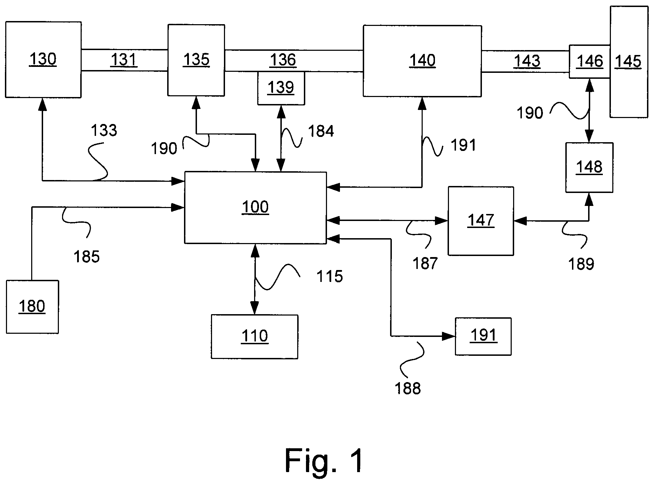

Figure 1 depicts schematically chosen parts of a power train and a brake system in a motor vehicle. The power train and the brake system depicted in Figure 1 may for example be intended to form part of a passenger car or a truck or some other heavy vehicle, e.g. a bus or the like.

The power train comprises an engine 130 connected to a gearbox 140 via an automatically controlled clutch function 135.

The engine 130 has an output shaft 131 connected to an automatically controlled clutch function 135. An automatically controlled clutch function 135 comprises for example an automatically controlled dry-plate or wet-plate clutch. An automatically controlled clutch function 135 further comprises configurations with one, two or more automatically controlled clutches of some kind (two as used in a so-called direct shift gear, DSG, gearbox).

The automatically controlled clutch function 135 is also connected to a shaft 136. The shaft 136 is an input shaft to a gearbox 140. The gearbox 140 has an output shaft 143 intended to transmit power to a number of vehicle wheels 145 in a known way. The automatically controlled clutch function 135 is adapted to being able to interrupt the power transfer in the power train which comprises the shaft 131, the clutch 135, the shaft 136, the gearbox 140 and the shaft 143.

The brake system comprises a number of brake cylinders, one for each vehicle wheel 145. The brake cylinder (not depicted in the diagram) is of conventional configuration. A pushrod capable of being deployed and retracted which protrudes from the brake cylinder is operatively connected to brake means 146 to prevent the wheel 145 from rotating when the pushrod is moved axially to a deployed position, and to release the wheel for rotation when the pushrod is moved axially to a retracted position. The movement of the pushrod is controlled by means of compressed air from a pneumatic circuit connected to the brake cylinder. The magnitude of the braking force exerted by the brake means 146 upon the relating wheel 145 depends on the prevailing pneumatic pressure in the brake cylinder.

The brake system may also be a hydraulic system. The pneumatic or hydraulic pressure in the brake cylinder is hereinafter meant by the comprehensive expression "brake pressure".

The vehicle is provided with a brake control unit 147 for regulating the brake pressure, and hence the braking force exerted by the brake means 146 upon the vehicle's wheels 145. The brake control unit 147 may be adapted to generating a control signal 189 for a valve device 148 which then regulates the brake pressure on the basis of this control signal.

The engine 130, the automatic clutch function 135, the gearbox 140 and the brake control unit 147 are controlled by at least one control unit 100, e.g. an electronic control unit (ECU). The control unit 100 is adapted to receiving sensor signals from various parts of the vehicle, including, but not limited to, the engine 130, the automatic clutch function 135, the gearbox 140 and the brake control unit 147. The control unit 100 is further adapted to delivering control signals to various parts and components of the vehicle, including, but not limited to, control signals for the engine 130, the automatic clutch function 135, the gearbox 140 and the brake control unit 147.

The brake control unit 147 may also be integrated in the control unit 100.

The brake control unit 147 may be adapted to receiving a control signal 187 which represents a certain set-point value for the brake pressure. The brake control unit then controls the regulation of the brake pressure to said set-point value.

The brake control unit 147 may alternatively be adapted to receiving a control signal 187 which represents a certain set-point value for the vehicle's retardation. On the basis of said control signal 187 and suitable control signals from various parts of the vehicle, the brake control unit 147 then calculates the brake pressure which corresponds to the retardation demanded. The brake control unit then controls the regulation of the brake pressure to said calculated value.

The control unit 100 is signal-connected to an operating means for power demand 180, e.g. an acceleration control such as an accelerator pedal. A driver of the vehicle may use the operating means 180 to set a desired speed or torque for the engine 130.

The control of various parts and components in the vehicle is governed by pre-programmed instructions in the control unit. The pre-programmed instructions typically take the form of a computer programme product which is stored on a digital storage medium, e.g. a working memory (RAM), flash memory (EPROM, EEPROM) or a read-only memory (ROM), and is executed by the control unit. The vehicle's behaviour in a specific situation can be adjusted by altering the pre-programmed instructions.

The functions of the control unit 100 may also be divided between two or more separate control units, here exemplified by a further control unit 110.

A commonly applied way of transmitting sensor signal values, control parameters and other information between various sensors and/or control units in a motor vehicle is to use a CAN (controller area network) bus. In the example here described, the control units and the sensors are connected together via a CAN bus but may alternatively be connected together via, for example, FlexRay and TTCAN or in some other suitable way.

A first state sensor 139 is associated with the gearbox output shaft 143. The first state sensor 139 is adapted to sending to the control unit 100 a signal 184 which represents the angular velocity of the gearbox output shaft 143. Said angular velocity may be used to estimate the vehicle's speed, to which it is substantially proportional. The unit of measure in which the angular velocity is denominated may for example be radians per second. The first state sensor 139 may be adapted to continuously sending signals 184 which represent instantaneous values of the angular velocity.

In an alternative version, the first state sensor 139 is adapted to continuously sending to the control unit 100 signals 184 which contain information about the relative instantaneous rotation angle of the gearbox output shaft. On the basis of these signals 184, the control unit can calculate the angular velocity of the gearbox output shaft 143.

In an alternative version, the first state sensor 139 is associated with the gearbox input shaft 136.

In a further alternative version, the first state sensor 139 may be situated at any location along the power train between the gearbox output shaft and any of the vehicle's wheels. The first state sensor 139 may also be situated in the immediately vicinity of any of the vehicle's wheels 145.

An advantage of the first state sensor 139, which thus detects a angular velocity of, for example, a shaft, being associated with the gearbox input shaft 136 is that this makes it possible to achieve better resolution in the detection of the angular velocity (and hence of the vehicle speed) as compared with the first state sensor 139 being associated with the gearbox output shaft 143 or being situated at some other location along the power train between the gearbox output shaft 143 and any of the vehicle's wheels 145.

The better resolution in the detection of the angular velocity is a consequence of the transmission ratio in the gearbox 140. The transmission ratio in the gearbox 140 normally results in the gearbox input shaft 136 rotating at a higher angular velocity, relative to the angular velocity of the vehicle's wheels 145, than that of the gearbox output shaft 143.

In other words, for the best possible resolution in the detection of the angular velocity, the first state sensor 139 should be situated adjacent to whichever of the power train's constituent parts between the automatic clutch function 135 and the vehicle's wheels 145 rotates at the highest angular velocity relative to that of the vehicle's wheels 145.

In at least one of the preferred embodiments, a second state sensor 191 is also used. The second state sensor 191 is adapted to sending to the control unit 100 a signal 188 which represents the vehicle's acceleration. The second state sensor 191 may be an accelerometer. The second state sensor 191 may be adapted to continuously sending signals 188 which represents instantaneous values of the acceleration.

Said signal 188 from the second state sensor 191, representing the vehicle's acceleration, may with advantage be used to determine in which direction a vehicle starts to roll from having been substantially stationary. The signal 188 from the second state sensor 191 (representing the vehicle's acceleration) may provide a quicker indication of the direction in which the vehicle starts to roll than the first state signal 184 (which represents the angular velocity of, for example, the gearbox output shaft 143).

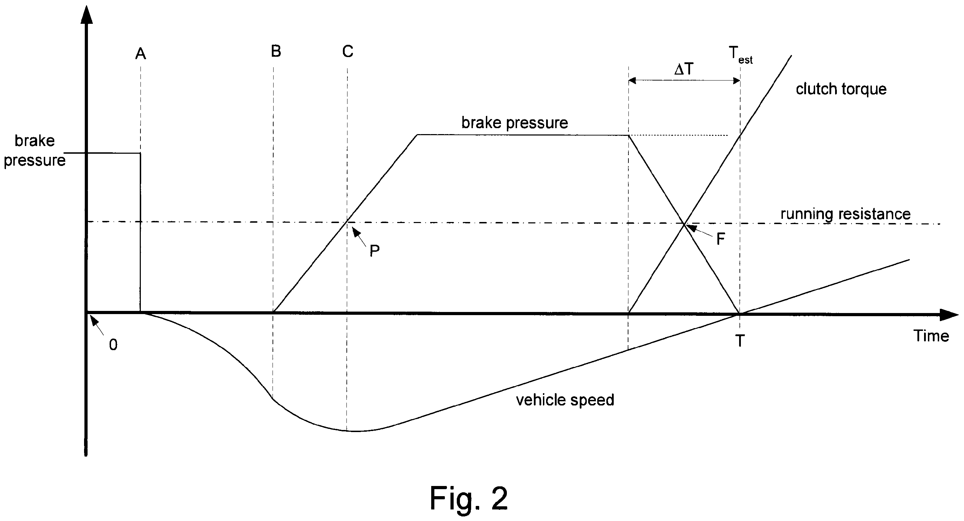

A method according to an embodiment of the present invention is described below with reference to Figure 2.

A vehicle is stationary on, for example, an upgrade from a time 0 to a time A.

This is achieved by the vehicle's driver keeping the brake pedal depressed, thereby generating a certain brake pressure which causes the vehicle to stand still on the upgrade. The vehicle's gearbox 140 has been put into a state which indicates a direction of movement, e.g. the first forward gear. The vehicle's automatic clutch function 135 is in an open state, i.e. a state in which no power is transmitted.

At time A, the driver releases the brake pedal and the vehicle starts rolling rearwards downhill at an increasing speed, as illustrated by the vehicle speed curve in Figure 2.

When the driver releases the brake pedal, any rolling direction of the vehicle is detected. Detecting the direction in which the vehicle is rolling is done, according to a preferred embodiment, by the control unit 100 analysing a signal from the first state sensor 139. The first state sensor 139 is adapted to sending to the control unit 100 a signal 184 which represents the angular velocity of, for example, the gearbox output shaft 143.

According to another preferred embodiment, detecting the direction in which the vehicle is rolling is done by the control unit 100 analysing a signal from the second state sensor 191. The second state sensor 191 is adapted to sending to the control unit 100 a signal 188 which represents the vehicle's acceleration. When the vehicle starts to roll from having been substantially stationary, the signal 188 from the second state sensor 191 gives a quicker indication of the direction in which the vehicle starts to roll than the first state signal 184 (which represents the angular velocity of, for example, the gearbox output shaft 143).

According to an embodiment, the driver delays engaging the gear until after time A but before a time B at which he/she depresses the accelerator pedal.

At time B, the control unit 100 finds that the vehicle is in a first state defined by at least

- detection that its gearbox 140 is in a state which indicates a direction of movement;
- detection that its automatic clutch function 135 is in a substantially open state;
- detection of depression of the accelerator pedal 180.

The rolling direction detected is then compared with the direction of movement indicated by the gearbox state detected.

If the vehicle is found to be substantially stationary or rolling in the direction of movement indicated by the gearbox state detected, it adopts a prior art normal move-off procedure whereby a slide-in process for the clutch function 135 is initiated.

According to the present invention, if the vehicle is found to be rolling in an opposite direction to that indicated by the gearbox state detected, its service brakes are applied, as illustrated schematically in Figure 2, with increasing brake pressure from time B onwards. As also illustrated in Figure 2, this reduces the vehicle's acceleration (the absolute amount of the vehicle speed derivative).

The method according to the invention leads to less wear and/or thermal stress on the automatic clutch function 135 as compared with prior art which in this situation would instead initiate a slide-in process for the automatic clutch function 135.

The method according to the invention also leads to less wear and/or thermal stress on the automatic clutch function 135 without the driver perceiving any adverse effects on the vehicle's drivability.

In a preferred embodiment, the engine 130 is controlled by the control unit 100 to a speed corresponding to its initial speed at current accelerator pedal position when the accelerator pedal is depressed. The driver then perceives that the engine responds to depression of the accelerator pedal in the same way as in a prior art move-off procedure whereby the vehicle is braked by a clutch slide-in process.

The accelerator pedal position may be converted by the control unit to a control signal which represents a certain torque to be provided from the engine 130. Said torque is calculated in a known way, e.g. on the basis of:

- vehicle weight,
- current gear,
- road gradient,
- running resistance.

The engine 130 feeds information about how much torque is available at current engine speed back to the control unit 100, which uses this information to be able to control the engine 130 to the engine speed which corresponds to the desired torque.

Alternatively, the accelerator pedal position may correspond to a certain engine speed, in which case the control unit 100 controls the engine 130 towards that speed, irrespective in principle of the torque delivered by the engine 130.

An advantage of the engine's speed from time B in Figure 2 onwards being controlled towards a speed which corresponds to its initial speed at current accelerator pedal position is that the driver has the same perception of the vehicle's drivability as in a prior art move-off procedure whereby the vehicle is braked by a slide-in process of the clutch function 135.

A further advantage of the engine's speed from time B in Figure 2 onwards being controlled towards a speed which corresponds to its initial speed at current accelerator pedal position is that the engine 130 will already be running at the right speed when the clutch function 135 at a subsequent time ($T_{est}$ -$\Delta$T) is caused to engage in the power train.

As previously mentioned, the vehicle's service brakes are applied from time B onwards if it is found to be rolling in an opposite direction to that indicated by the gearbox state detected.

According to a preferred embodiment, the vehicle's service brakes are applied in such a way as to effect retardation of the vehicle demanded by the control unit 100. Said retardation demanded is calculated, according to a preferred embodiment, as a function of at least the position of the accelerator pedal.

This further contributes to the driver having the same perception of the vehicle's drivability as in a prior art move-off procedure whereby the vehicle is instead braked by a slide-in process of the clutch function 135.

According to a preferred embodiment, the retardation demanded is calculated on the basis that it has to be substantially proportional to the position of the accelerator pedal.

According to another preferred embodiment, the retardation demanded is calculated on the basis that it has to be an estimate of the retardation which would result from a prior art move-off procedure whereby the vehicle is braked by a slide-in process of the clutch function 135. Said estimate is with advantage a function of at least one of the following parameters:

- accelerator pedal position,
- vehicle weight,
- current gear,
- road gradient,
- running resistance.

From time B in Figure 2 onwards, the vehicle's acceleration (the absolute amount of the vehicle speed derivative) is therefore caused to decrease.

At time C in Figure 2 the absolute amount of the vehicle's speed (rolling rearwards) no longer increases; the vehicle speed derivative is equal to zero. Thereafter the absolute amount of the vehicle's speed is caused to decrease towards zero (momentary standstill), which is reached at time T in Figure 2.

At time C, the current brake pressure P is with advantage detected by the control unit 100. Said brake pressure corresponds to the current running resistance at constant vehicle speed (vehicle speed derivative equal to zero).

According to a preferred embodiment, the vehicle's instantaneous speed is registered continuously by the control unit 100. On the basis of the vehicle's instantaneous, and previously detected instantaneous, speeds, the control unit 100 calculates an estimate $T_{est}$ of the time T when the vehicle's speed will be equal to zero. A slide-in process for the automatic clutch function 135 is then initiated a time $\Delta$T before time $T_{est}$.

Time $T_{est}$ is calculated by extrapolation of the vehicle speed time pattern.

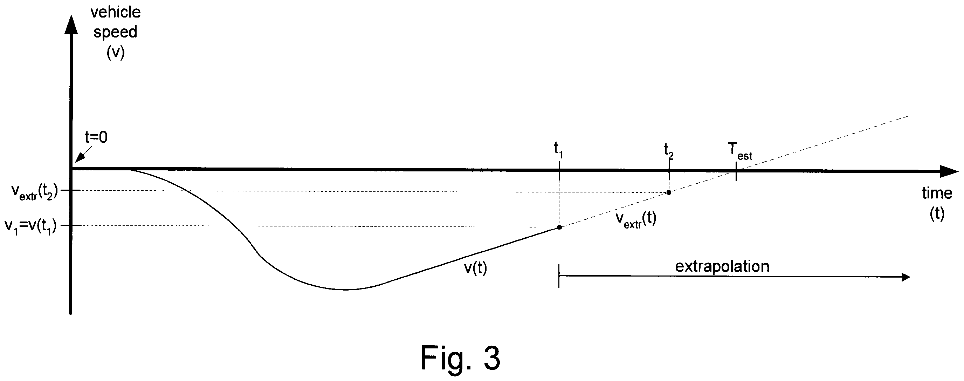

Time $T_{est}$ may be calculated by linear extrapolation of the vehicle speed time pattern. With reference to Figure 3, the vehicle's extrapolated speed $v_{extr}$ at time $t_1$ may therefore be calculated as

$$v_{extr}(t) = (t - t_1) \cdot v'(t_1) + v_1$$

for times $t \geq t_1$, where $v'(t_1)$ is an estimate of the vehicle's speed derivative at time $t_1$. The vehicle speed derivative at time $t_1$ may be estimated by any suitable known method for the purpose, e.g. Euler's backward difference.

To calculate the estimated time $T_{est}$ when the vehicle's speed will probably be close to zero, the extrapolated speed $v_{extr}$ is added to zero, followed by solving time $T_{est}$ from the equation as follows:

$$T_{est} = t_1 - \frac{v_1}{v'(t_1)}$$

The vehicle's speed and also, from it, the estimated time $T_{est}$ when it will probably be close to zero may also be estimated by some other form of extrapolation, e.g. polynomial extrapolation.

The estimated time $T_{est}$ when the vehicle's speed will probably be close to zero may be estimated continuously during the period up to time $T_{est}$, leading to a gradually more exact estimate of said time.

One of the great advantages of initiating a slide-in process for the automatic clutch function 135 a time $\Delta T$ before the time T at which the vehicle's speed will be equal to zero is the consequent avoidance of the jerk in the vehicle which would result from a slide-in process for the clutch function 135 not being initiated until the vehicle's speed is equal to zero.

The fact that the slide-in process for the clutch function 135 is begun a time before the vehicle's speed in an opposite direction to that indicated by a chosen gear position has been brought down to zero entails a certain increase in wear and/or thermal stress on the clutch function 135 as compared with if the vehicle's speed is equal to zero when the slide-in process is begun. Time $\Delta T$ therefore needs to be minimised, but subject to avoiding any major impact on the driver's perception of the vehicle's drivability.

According to an embodiment, time $\Delta T$ is a predetermined constant. It may be of the order of 500 ms. It may be between 100 ms and 1 second.

To further optimise the trade-off between driver comfort and wear and/or thermal stress on the clutch function 135, time $\Delta T$ may be calculated instantaneously in the control unit 100 on the basis of at least one of the parameters detected:

- vehicle speed
- current running resistance
- accelerator pedal position
- retardation demanded
- the vehicle's actual retardation
- variations in the vehicle's actual retardation

If time $\Delta T$ calculated by the control unit 100 is found to be longer than actual time remaining until time $T_{est}$, the slide-in process for the clutch function 135 is begun immediately.

According to a preferred embodiment, the slide-in process for the clutch function 135 which is begun at time $T_{est}$-$\Delta T$ by the control unit 100 comprises:

- gradually reducing the retardation demanded (which leads to the brake pressure being caused to decrease)
- gradually causing the clutch function 135 to engage in the power train so that the original retardation demanded is maintained.

This is illustrated in Figure 2 in which, at time $T_{est}$-$\Delta T$, not only is the brake pressure caused to decrease but also the clutch torque is caused to increase (the clutch function 135 is caused to gradually engage in the power train) in such a way that the retardation corresponding to the position of the accelerator pedal is maintained.

The brake pressure is caused to decrease so that it is substantially equal to zero at time $T_{est}$. The decreasing brake pressure and the increasing clutch torque are also controlled so that the respective curves intersect at a point F (see Figure 2) which corresponds to the running resistance.

It is therefore the case that at point F the brake pressure should be the same as at point P in Figure 2. The clutch torque which corresponds to the running resistance is calculated in the same known way as when setting the vehicle in motion from stationary.

At time $T_{est}$ in Figure 2, which should be therefore be as close to time T as possible, the vehicle's speed is very close or equal to zero. Moreover, the brake pressure has been caused to be substantially equal to zero at that time.

When the vehicle is substantially stationary, it adopts for time t > $T_{est}$ a prior art normal move-off procedure and the vehicle is driven in the direction indicated by a chosen gear position.

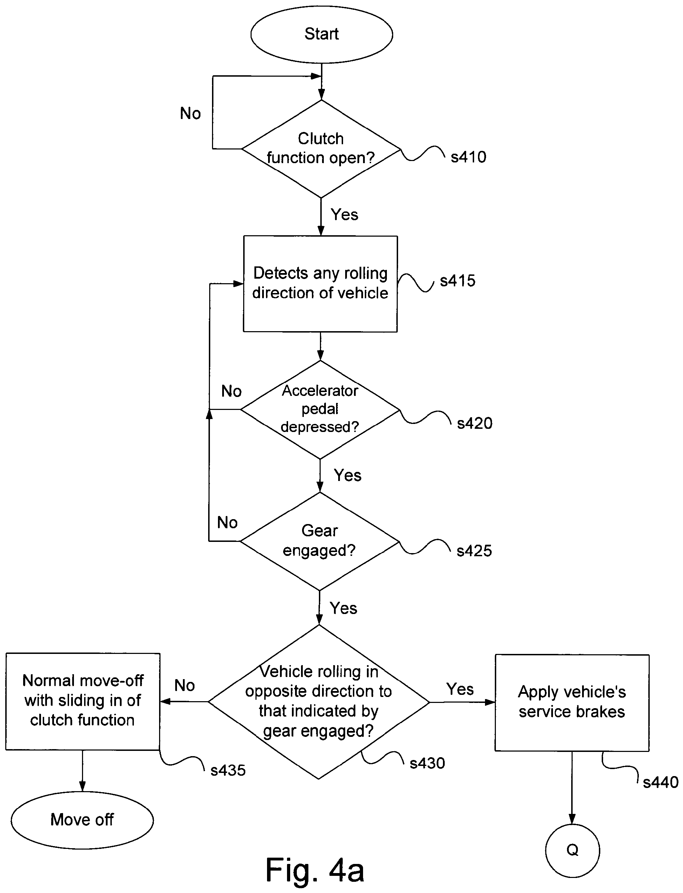

To further illustrate a method according to an embodiment of the invention, we now refer to the flowchart in Figure 4a.

The method comprises a first step s410 which determines whether the clutch function 135 is in an open state or not. The open state is a state in which the clutch function 135 is in a fully open state.

If the clutch function is found to be in an open state, a subsequent step s415 is performed. If the clutch function is not found to be in an open state, step s410 is repeated.

Step s415 detects any rolling direction of the vehicle. Said detection of the direction in which the vehicle is rolling may, as previously mentioned, be done by the control unit 100 analysing a signal from the first state sensor 139, which is adapted to sending to the control unit 100 a signal 184 which represents the angular velocity of, for example, the gearbox output shaft 143. Detecting at step s415 the direction in which the vehicle is rolling may, as also previously mentioned, be done by the control unit 100 analysing a signal from the second state sensor 191, which is adapted to sending to the control unit 100 a signal 188 which represents the vehicle's acceleration. Step s415 is followed by a step s420.

Step s420 detects whether the vehicle's accelerator pedal 180 is depressed or not. If the pedal is found to be depressed, a step s425 is performed. If the pedal is not found to be depressed, step s415 is repeated.

Step s425 detects whether the vehicle's gearbox 140 is in a state which indicates a direction of movement or not. If the gearbox 140 is found to be in a state which indicates a direction of movement, a step s430 is performed. If the gearbox 140 is not found to be in a state which indicates a direction of movement, step s415 is repeated.

Step s430 compares the vehicle's detected rolling direction with the direction of movement indicated by the gearbox state detected. If the vehicle's rolling direction detected is found to be the same as the direction of movement indicated by the gearbox state detected, a step s435 is performed. If the vehicle's rolling direction detection is found to be opposite to the direction of movement indicated by the gearbox state detected, a step s440 is performed.

Step s435 effects a prior art normal move-off procedure with a slide-in process for the clutch function 135.

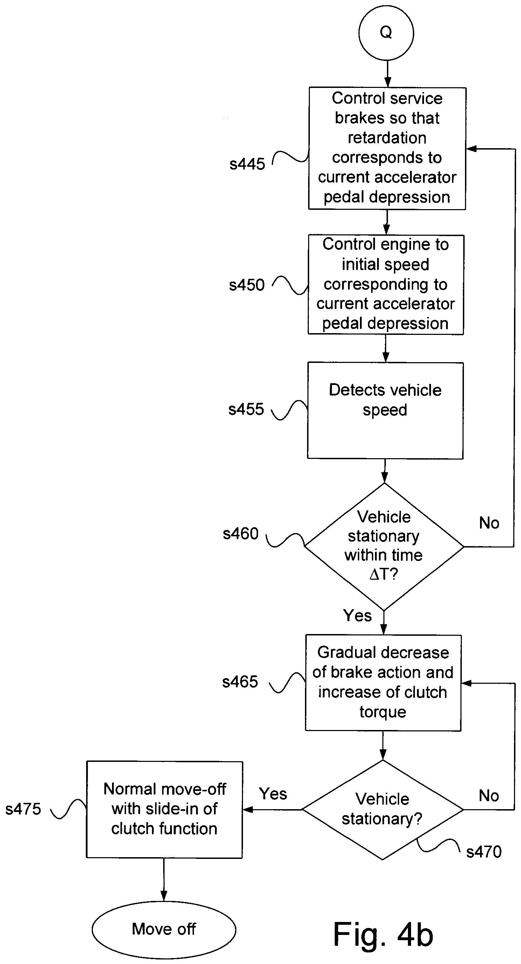

At step s440, the control unit 100 causes the vehicle's service brakes to be applied. Step s440 is followed by a step s445 in Figure 4b.

At step s445 (Figure 4b) the control unit 100 controls the service brakes in such a way that the vehicle's retardation corresponds to current accelerator pedal depression. As previously mentioned, the retardation demanded may be calculated on the basis that it has to be substantially proportional to the position of the accelerator pedal. As also previously mentioned, the retardation demanded may be calculated on the basis that it has to be an estimate of the retardation which would result from a prior art move-off procedure whereby the vehicle is braked by a slide-in process of the clutch function 135. Step s445 is followed by a step s450.

At step s450, the control unit 100 controls the engine to the initial speed which corresponds to the current position for the accelerator pedal 180. The accelerator pedal position may correspond to a certain torque which has to be provided. Alternatively, the accelerator pedal position may correspond to a certain engine speed. Step s450 is followed by a step s455.

Step s455 detects the vehicle's speed. The control unit 100 registers the vehicle's instantaneous speed continuously and stores these values. Step s455 is followed by a step s460.

Step s460 decides, on the basis of the vehicle's current instantaneous speed and previously stored instantaneous speeds, whether the vehicle will be substantially stationary within time $\Delta T$. As previously mentioned, time $\Delta T$ may be a predetermined constant. It may also be calculated instantaneously by the control unit 100. If it is decided that the vehicle will be stationary within time $\Delta T$, a step s465 is performed. If it is decided that the vehicle will not be stationary within time $\Delta T$, step s445 is performed.

At step s465, the braking action of the service brakes is caused to gradually decrease while at the same time the clutch function 135 is caused in engage in the power train to an extent such that the retardation which corresponds to the position of the accelerator pedal is maintained. Step s465 is followed by a step s470.

Step s470 decides whether the vehicle's instantaneous speed is substantially equal to zero or not. If the vehicle's speed is not found to be substantially equal to zero, step s465 is performed. If the vehicle's speed is found to be substantially equal to zero, a step s475 is performed.

Step s475 adopts a prior art normal move-off procedure with sliding in of the clutch function 135, followed by the method reverting to step s410 in Figure 4a.

Computer programme code for implementing a method according to the invention is with advantage incorporated in a computer programme which can be read into the internal memory of a computer, e.g. the internal memory of an electronic control unit of a motor vehicle. Such a computer programme is with advantage provided via a computer programme product comprising a data storage medium which is readable by an electronic control unit and which has the computer programme stored on it. Said data storage medium is for example an optical data storage medium in the form of a CD ROM disc, a DVD disc etc., a magnetic storage medium in the form of a hard disc, a diskette, a cassette tape etc., or a memory of the ROM, PROM, EPROM or EEPROM type or a flash memory.

The invention is particularly applicable to a vehicle which is provided an automatically controlled clutch function, i.e. a clutch which is not controlled by the vehicle driver via a clutch pedal or some other type of clutch control device.

The invention is nevertheless applicable also to a vehicle in which the clutch function is controlled at least partly by the driver via a clutch pedal or some other type of clutch control device. For example, the clutch regulation normally controlled by the driver may switch to an automatically controlled position at an appropriate time for moving off.

The invention is of course in no way limited to the embodiments described above, since many possibilities for modifications thereof are likely to be obvious to a specialist within the field without departing from the basic idea of the invention as defined in the attached claims.

## Claims

1.  A method for control of a power train during a move-off procedure on a hill, comprising an engine, a clutch function and a gearbox, and a service brake system in a vehicle,
    **characterised by** the steps of:

    - detecting that the vehicle's clutch function is in a substantially open state;
    - detecting a direction in which the vehicle is rolling;

- detecting depression of the accelerator pedal;
- detecting that the vehicle's gearbox is in a state which indicates a direction of movement;
- deciding whether the vehicle is rolling in an opposite direction to that indicated by the gearbox state detected;
- applying the vehicle's service brakes if the vehicle is found to be rolling in an opposite direction to that indicated by the gearbox state detected.

2. A method according to claim 1, **characterised in that** the vehicle is substantially stationary when the gearbox is put into the state which indicates the direction of movement.

3. A method according to claim 1, **characterised in that** the vehicle rolling in an opposite direction to that indicated by the gearbox state detected when the gearbox is put into the state which indicates the direction of movement.

4. A method according to any one of the foregoing claims,
   **characterised in that** the step of detecting a direction in which the vehicle is rolling comprises detecting the rotation speed of at least one constituent part of the power train.

5. A method according to claim 4, **characterised in that** the step of detecting a direction in which the vehicle is rolling comprises detecting the rotation speed of the output shaft of the gearbox.

6. A method according to any one of claims 1-3, **characterised in that** the step of detecting a direction in which the vehicle is rolling comprises analysing a signal from an accelerometer.

7. A method according to any one of the foregoing claims,
   **characterised in that** the vehicle's engine is controlled to a speed which corresponds to the initial speed at current accelerator pedal position.

8. A method according to any one of the foregoing claims,
   **characterised in that** the vehicle's service brakes are applied in such a way as to effect a demanded retardation of the vehicle.

9. A method according to claim 8, **characterised in that** the retardation demanded is calculated as a function of at least the position of the accelerator pedal.

10. A method according to claim 9, **characterised in that** the retardation demanded is substantially proportional to the position of the accelerator pedal.

11. A method according to claim 9, **characterised in that** the retardation demanded is an estimate of the retardation which would have been effected in a clutch engagement process when the vehicle's service brakes were not applied, which estimate is the function of at least one of the following parameters:

    - accelerator pedal position,
    - vehicle weight,
    - current gear,
    - road gradient,
    - running resistance.

12. A method according to any one of the foregoing claims,
    **characterised by** the steps of:

    - continuously detecting the vehicle's instantaneous speed
    - estimating, on the basis of the vehicle's instantaneous, and previous detected instantaneous, speeds, a time $T_{est}$ when it will be substantially stationary
    - beginning a clutch engagement process at time $T_{est}$ - $\Delta T$.

13. A method according to claim 12, **characterised in that** time $\Delta T$ is a predetermined constant.

14. A method according to claim 12, **characterised in that** time $\Delta T$ is calculated instantaneously on the basis of at least one of the parameters detected:

    - vehicle speed
    - current running resistance
    - accelerator pedal position
    - retardation demanded
    - the vehicle's actual retardation
    - variations in the vehicle's actual retardation

15. A method according to any one of claims 12-14, **characterised in that** the clutch engagement process comprises:

    - gradually reducing the retardation demanded
    - gradually controlling the clutch function to engage in the power train so that the retardation originally demanded is maintained.

16. A method according to claim 15, **characterised in that** when the vehicle's speed has been brought down to substantially equal to zero:

    - the service brakes are put into an unapplied position
    - normal move-off procedure is adopted

17. A computer programme which can be read into an internal memory of a computer in a motor vehicle and which comprises computer programme code for causing the computer to effect the method steps according to any one of claims 1-16.

18. A computer programme product comprising a data storage medium which can be read by an electronic control unit and which has a computer programme according to claim 17 stored on it.

19. An electronic control unit comprising an execution means, a memory connected to the execution means and a data storage medium which is connected to the execution means and which has a computer programme according to claim 17 stored on it.

**Patentansprüche**

1. Verfahren zur Steuerung eines Antriebstrangs während eines Anfahrvorgangs an einem Berg, umfassend einen Motor, eine Kupplungsfunktion und ein Getriebe, und eines Betriebsbremssystems in einem Fahrzeug,
   **gekennzeichnet durch** die Schritte:

   - Ermitteln, dass die Kupplungsfunktion des Fahrzeugs in einem im Wesentlichen offenen Zustand ist;
   - Ermitteln einer Richtung in welcher das Fahrzeug rollt;
   - Ermitteln eines Herunterdrückens des Fahrpedals;
   - Ermitteln, dass das Getriebe des Fahrzeugs in einem Zustand ist, der die Bewegungsrichtung anzeigt;
   - Ermitteln, ob das Fahrzeug in eine der von dem Getriebezustand angezeigten Richtung entgegengesetzte Richtung rollt;
   - Einsetzen der Betriebsbremsen des Fahrzeugs, falls festgestellt wird, dass das Fahrzeug in eine der von dem Getriebezustand angezeigten Richtung entgegengesetzte Richtung rollt.

2. Verfahren nach Anspruch 1, **dadurch gekennzeichnet, dass** das Fahrzeug im Wesentlichen stillstehend ist, während das Getriebe in einen Zustand gebracht wird, der die Bewegungsrichtung angibt.

3. Verfahren nach Anspruch 1, **dadurch gekennzeichnet, dass** das Fahrzeug in eine der von dem Getriebezustand angezeigten Richtung entgegengesetzte Richtung rollt, wenn das Getriebe in den Zustand versetzt wird, der die Bewegungsrichtung anzeigt.

4. Verfahren nach einem der vorhergehenden Ansprüche, **dadurch gekennzeichnet, dass** in dem Schritt, in dem die Rollrichtung des Fahrzeugs ermittelt wird, die Ermittlung der Drehgeschwindigkeit mindestens eines Bestandteils des Antriebstrangs enthalten ist.

5. Verfahren nach Anspruch 4, **dadurch gekennzeichnet, dass** der Schritt, in dem die Rollrichtung des Fahrzeugs ermittelt wird, die Ermittlung der Drehgeschwindigkeit des Abtriebstrangs des Getriebes umfasst.

6. Verfahren nach einem der Ansprüche 1-3, **dadurch gekennzeichnet, dass** der Schritt zur Ermittlung der Rollrichtung des Fahrzeugs die Analyse eines Signals eines Beschleunigungsmessers umfasst.

7. Verfahren nach einem der vorhergehend Ansprüche, **dadurch gekennzeichnet, dass** der Motor des Fahrzeugs auf eine Drehzahl gesteuert wird, die der Ausgangsdrehzahl bei der aktuellen Fahrpedalposition entspricht.

8. Verfahren nach einem der vorhergehend Ansprüche, **dadurch gekennzeichnet, dass** die Betriebsbreme des Fahrzeugs derart eingesetzt wird, dass sie zu einer geforderten Verzögerung des Fahrzeugs führt.

9. Verfahren nach Anspruch 8, **dadurch gekennzeichnet, dass** die benötigte Verzögerung mit einer Funktion von wenigstens der Stellung des Fahrpedals berechnet wird.

10. Verfahren nach Anspruch 9, **dadurch gekennzeichnet, dass** die benötigte Verzögerung im Wesentlichen sich proportional zur Stellung des Fahrpedals verhält.

11. Verfahren nach Anspruch 9, **dadurch gekennzeichnet, dass** die benötigte Verzögerung eine Schätzung der Verzögerung ist, die sich aus einem Einkupplungsprozess ergibt, wenn die Betriebsbremsen des Fahrzeugs nicht betätigt werden, und die Schätzung eine Funktion von wenigstens einem der folgenden Parameter ist:

    - Position des Fahrpedals,
    - Fahrzeuggewicht,
    - derzeitiger Gang,
    - Straßensteigung,
    - Fahrwiderstand.

12. Verfahren nach einem der vorhergehend Ansprüche, **gekennzeichnet durch** folgende Schritte:

    - Kontinuierliche Ermittlung der momentanen Fahrzeuggeschwindigkeit
    - Schätzung einer Zeit $T_{est}$ zu der es im Wesentlichen stillstehend sein wird auf Basis der momentanen und der zuvor ermittelten momentanen Fahrzeuggeschwindigkeit
- Einleiten eines Einkupplungsprozesses zur Zeit $T_{est}$ - $\Delta T$.

13. Verfahren nach Anspruch 12, **dadurch gekennzeichnet, dass** die Zeit $\Delta T$ eine vorbestimmte Konstante ist.

14. Verfahren nach Anspruch 12, **dadurch gekennzeichnet, dass** die Zeit $\Delta T$ unverzüglich auf Basis wenigstens eines aufgezeichneten Parameters ermittelt wird:

   - Fahrzeuggeschwindigkeit,
   - derzeitiger Fahrwiderstand,
   - Fahrpedalposition,
   - geforderte Verzögerung,
   - tatsächliche Verzögerung des Fahrzeugs,
   - Veränderungen der tatsächlichen Verzögerung des Fahrzeugs.

15. Verfahren nach einem der Ansprüche 12-14, **dadurch gekennzeichnet, dass** der Einkupplungsprozess umfasst:

   - graduelles Reduzieren der angeforderten Verzögerung,
   - graduelles Steuern der Kupplungsfunktion zum Einkuppeln in den Antriebstrang, sodass die ursprünglich angeforderte Verzögerung bewirkt wird.

16. Verfahren nach Anspruch 15, **dadurch gekennzeichnet, dass** sobald die Fahrzeuggeschwindigkeit im Wesentlichen auf null reduziert wurde:

   - die Betriebsbremsen in eine nicht angewendete Position gebracht werden
   - der normale Anfahrvorgang angewandt wird.

17. Computerprogramm, das in einen internen Speicher eines Computers eines motorgesteuerten Fahrzeugs eingelesen werden kann und das Programmcode enthält, das den Computer dazu veranlasst die Verfahrensschritte nach einem der Ansprüche 1-16 zu bewirken.

18. Computerprogrammprodukt, das ein Datenspeichermedium enthält, das von einer elektronischen Steuereinheit gelesen werden kann und das ein Computerprogramm nach Anspruch 17 auf sich gespeichert trägt.

19. Elektronische Steuereinheit, die ein Ausführungsmittel, einen mit dem Ausführungsmittel verbundenen Speicher und ein Datenspeichermedium umfasst, das mit dem Ausführungsmittel verbunden ist und das ein Computerprogramm nach Anspruch 17 auf sich gespeichert trägt.

## Revendications

1. Procédé de commande d'un groupe motopropulseur lors d'une procédure de mise en route sur une colline, comprenant un moteur, une fonction d'embrayage et une boîte de vitesses, et un système de freins de service dans un véhicule, **caractérisé par** les étapes de :

   - détecter que la fonction d'embrayage du véhicule est dans un état sensiblement ouvert ;
   - détecter une direction dans laquelle le véhicule roule ;
   - détecter l'enfoncement de la pédale d'accélérateur ;
   - détecter que la boîte de vitesses du véhicule est dans un état qui indique une direction de déplacement ;
   - décider si le véhicule roule dans une direction opposée à celle indiquée par l'état de boîte de vitesses détecté ;
   - appliquer les freins de service du véhicule s'il est trouvé que le véhicule roule dans une direction opposée à celle indiquée par l'état de boîte de vitesses détecté.

2. Procédé selon la revendication 1, **caractérisé en ce que** le véhicule est sensiblement stationnaire lorsque la boîte de vitesses est mise dans l'état qui indique la direction de déplacement.

3. Procédé selon la revendication 1, **caractérisé en ce que** le véhicule roule dans une direction opposée à celle indiquée par l'état de boîte de vitesses détecté lorsque la boîte de vitesses est mise dans l'état qui indique la direction de déplacement.

4. Procédé selon l'une quelconque des revendications précédentes, **caractérisé en ce que** l'étape de détecter une direction dans laquelle le véhicule roule comprend une détection de la vitesse de rotation d'au moins une partie constitutive du groupe motopropulseur.

5. Procédé selon la revendication 4, **caractérisé en ce que** l'étape de détecter une direction dans laquelle le véhicule roule comprend une détection de la vitesse de rotation de l'arbre de sortie de la boîte de vitesses.

6. Procédé selon l'une quelconque des revendications 1 à 3, **caractérisé en ce que** l'étape de détecter une direction dans laquelle le véhicule roule comprend l'analyse d'un signal provenant d'un accéléromètre.

**7.** Procédé selon l'une quelconque des revendications précédentes, **caractérisé en ce que** le moteur du véhicule est commandé à une vitesse qui correspond à la vitesse initiale à une position présente de la pédale d'accélérateur.

**8.** Procédé selon l'une quelconque des revendications précédentes, **caractérisé en ce que** les freins de service du véhicule sont appliqués de manière à effectuer un ralentissement demandé du véhicule.

**9.** Procédé selon la revendication 8, **caractérisé en ce que** le ralentissement demandé est calculé en fonction au moins de la position de la pédale d'accélérateur.

**10.** Procédé selon la revendication 9, **caractérisé en ce que** le ralentissement demandé est substantiellement proportionnel à la position de la pédale d'accélérateur.

**11.** Procédé selon la revendication 9, **caractérisé en ce que** le ralentissement demandé est une estimation du ralentissement qui aurait été effectué dans un processus d'enclenchement d'embrayage si les freins de service du véhicule n'avaient pas été appliqués, laquelle estimation est la fonction d'au moins un des paramètres suivants :

- position de pédale d'accélérateur,
- poids de véhicule,
- rapport de transmission en cours,
- gradient de route,
- résistance à l'avancement.

**12.** Procédé selon l'une quelconque des revendications précédentes, **caractérisé par** les étapes de :

- détecter en continu la vitesse instantanée du véhicule
- estimer, sur la base des vitesses instantanée, et instantanée détectée précédemment, du véhicule, un instant $T_{est}$ où il sera sensiblement stationnaire
- commencer un processus d'enclenchement d'embrayage à un instant $T_{est}$ - $\Delta$T.

**13.** Procédé selon la revendication 12, **caractérisé en ce que** le temps $\Delta$T est une constante prédéterminée.

**14.** Procédé selon la revendication 12, **caractérisé en ce que** le temps $\Delta$T est calculé instantanément sur la base d'au moins un des paramètres détectés :

- vitesse du véhicule

- résistance à l'avancement courante
- position de pédale d'accélérateur
- ralentissement demandé
- ralentissement effectif du véhicule
- variations du ralentissement effectif du véhicule.

**15.** Procédé selon l'une quelconque des revendications 12 à 14, **caractérisé en ce que** le processus d'enclenchement d'embrayage comprend les étapes de :

- réduire progressivement le ralentissement demandé
- commander progressivement la fonction d'embrayage pour un enclenchement avec le groupe motopropulseur de sorte que le ralentissement demandé à l'origine est maintenu.

**16.** Procédé selon la revendication 15, **caractérisé en ce que**, lorsque la vitesse du véhicule a été ramenée sensiblement à zéro :

- les freins de service sont placés dans une position non appliquée
- une procédure de mise en route normale est adoptée.

**17.** Programme informatique qui peut être lu dans une mémoire interne d'un ordinateur dans un véhicule à moteur et qui comprend un code de programme informatique pour amener l'ordinateur à effectuer les étapes de procédé selon l'une quelconque des revendications 1 à 16.

**18.** Produit de programme informatique comprenant un support de stockage de données qui peut être lu par une unité de commande électronique et qui a un programme informatique selon la revendication 17 stocké sur celui-ci.

**19.** Unité de commande électronique comprenant des moyens d'exécution, une mémoire connectée aux moyens d'exécution et un support de stockage de données qui est connecté aux moyens d'exécution et qui a un programme informatique selon la revendication 17 stocké sur celui-ci.

Fig. 1

Fig. 2

Fig. 3

EP 2 544 930 B1

Fig. 4a

Q

s445 — Control service brakes so that retardation corresponds to current accelerator pedal depression

s450 — Control engine to initial speed corresponding to current accelerator pedal depression

s455 — Detects vehicle speed

s460 — Vehicle stationary within time ΔT?

No

Yes

s465 — Gradual decrease of brake action and increase of clutch torque

No

s470 — Vehicle stationary?

Yes

s475 — Normal move-off with slide-in of clutch function

Move off

Fig. 4b

**EP 2 544 930 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6910988 B2
- US 6910988 B
- WO 2004067312 A